# EUROPÄISCHE PATENTSCHRIFT

(11) **EP 4 263 019 B1**
(45) Veröffentlichungstag und Bekanntmachung des Hinweises auf die Patenterteilung: **27.03.2024**
(21) Anmeldenummer: 22715523.1
(22) Anmeldetag: 07.03.2022
(51) Int. Cl.: B01D 39/08

(54) **VERBUNDFILTER UND VERFAHREN ZU DESSEN HERSTELLUNG**
COMPOSITE FILTER AND METHOD FOR PRODUCING SAME
FILTRE COMPOSITE ET SON PROCÉDÉ DE FABRICATION

(43) Veröffentlichungstag der Anmeldung: 25.10.2023
(73) Patentinhaber: Rauße, Guido, 48607 Ochtrup (DE); Röttgers, Bernd, 48683 Ahaus (DE)
(72) Erfinder: Rauße, Guido, 48607 Ochtrup (DE); Röttgers, Bernd, 48683 Ahaus (DE)
(74) Vertreter: adares Patent- und Rechtsanwälte Reininger & Partner GmbB
(86) Internationale Anmeldenummer: PCT/DE2022/100180
(87) Internationale Veröffentlichungsnummer: WO 2023/169616

(56) Entgegenhaltungen:
- EP-A1- 2 500 077
- DE-A1- 4 128 396
- DE-A1-102017 127 057
- DE-U1-202020 100 766

## Beschreibung

Die Erfindung betrifft einen Verbundfilter und ein Verfahren zu dessen Herstellung nach den Oberbegriffen der Ansprüche 1 und 6.

Verbundfilter der eingangs genannten Art werden häufig in der Industrie zur Trennung von Feststoffen aus Flüssigkeiten eingesetzt. Die Verbindung zweier Filtergewebe zu einem Verbundfilter ist nicht trivial. Nicht druckschriftlich belegt ist beispielsweise das Verbinden zweier Filtergewebe mit einem Bindefaden bekannt, wodurch ein chaotisches Doppellagengewebe mit hohem Durchflusswiderstand entsteht.

DE10 2017 127057 A1, EP 2 500 077 A1, DE 20 2020 100766 U1 und DE 41 28 396 A1 beschäftigen sich mit Verbundfiltern aus Verbundfilter aufweisend zumindest ein Grobfiltergewebe und zumindest ein Feinfiltergewebe, und hierbei speziell mit der Verbindung zwischen diesen beiden. In ersteren erfolgt die Verbindung der Filterlageflächen mit einem Klebstoff, wobei der Klebstoff als Vielzahl zueinander beabstandeter Klebebereiche zwischen den Filterlageflächen verteilt angeordnet ist. In letzterer wird zwischen feinem Filtergewebe und grobem Trägergewebe ein Schmelzgitter aus thermisch verschmelzbarem Kunststoff mit niedrigerem Schmelzpunkt als der des Filter- und des Trägergewebes eingelegt wird und beide Gewebe mindestens bei Schmelztemperatur des Schmelzgitterwerkstoffes zusammen gepresst.

Weiterhin nicht druckschriftlich belegt ist die Verbindung durch einen Klebstoffauftrag auf die erhabenen Kreuzungspunkte des Grobfiltergewebes bekannt, um beide Gewebe an wenigen definierten Punkten zu einem Verbundfilter zu verkleben. Allerdings ist für dieses Aufbringen sehr tiefgründiges technisches KnowHow notwendig und es ist fehleranfällig. Wenn der Klebstoffauftrag nicht korrekt ausgeführt wird, wenn zu viel oder zu wenig Klebstoff aufgetragen wird, verkleben zu viele Maschen oder die Verbindung hält nicht richtig. Die Folge ist ein hoher Durchflusswiderstand oder eine kurze Lebensdauer.

Es ist daher Aufgabe der vorliegenden Erfindung, einen neuen Verbundfilter und ein neues Verfahren zu dessen Herstellung vorzuschlagen, der diese Nachteile vermeidet.

Diese Aufgabe wird durch die vorliegende Erfindung nach der Lehre der unabhängigen Ansprüche 1 und 6 gelöst.

Vorteilhafte Ausführungsformen sind Gegenstand der abhängigen Ansprüche.

Erfindungsgemäß wird die Aufgabe gelöst durch einen Verbundfilter aufweisend zumindest ein Grobfiltergewebe und zumindest ein Feinfiltergewebe, wobei im Grobfiltergewebe Schmelzklebefäden eingewebt sind, welche eine zumindest bereichsweise schmelzfähige Oberfläche aufweisen, und wobei diese schmelzfähige Oberfläche durch Anschmelzen selbst den Klebstoff bildet, um zumindest bereichsweise mit den Fäden des Feinfiltergewebes zu verkleben.

Zur Bildung des Verbundfilters wird zumindest ein Grobfiltergewebe als Stützstruktur mit zumindest einem Feinfiltergewebe als Filterstruktur verbunden. Die Stützstruktur ist vergleichsweise robust ausgebildet und bildet die stützende Grundlage des Verbundfilters und macht ihn mechanisch stabil. Das Feinfiltergewebe ist feiner gewebt als das Grobfiltergewebe und weist eine kleinere Maschenweite auf. Es übernimmt die eigentliche Filterfunktion. Das Feinfiltergewebe allein würde den Umgebungsbedingungen im industriellen Nutzungsumfeld nicht lange Stand halten.

Im Grobfiltergewebe sind Schmelzklebefäden eingewebt, welche eine zumindest bereichsweise schmelzfähige Oberfläche aufweisen. Ein Schmelzklebefaden im Sinne der Erfindung ist ein Faden dessen Material, zumindest aber dessen Oberfläche unter Wärmeeinwirkung zumindest bereichsweise schmelzen und bei Abkühlung klebend aushärten kann. Diese Eigenschaft bieten einige Kunststoffe.

Die schmelzfähige Oberfläche bildet durch Anschmelzen selbst den Klebstoff, um zumindest bereichsweise mit den Fäden des Feinfiltergewebes zu verkleben. Die Schmelztemperatur der Schmelzklebefäden ist geringer als die Schmelztemperatur anderer Fäden im Gewebe, sodass unter passender Wärmeeinwirkung nicht das Gewebe schmilzt.

Es bedarf also zur Verbindung von Grobfiltergewebe mit Feinfiltergewebe keines separaten Klebstoffauftrags. Die Oberfläche der ins Grobfiltergewebe eingewebten Schmelzklebefäden schmilzt, sie steht in Kontakt mit dem Feinfiltergewebe und härtet im Ergebnis das Grobfiltergewebe mit dem Feinfiltergewebe verklebend aus.

Dadurch wird wie erwähnt kein separater und technisch komplizierter und fehlerträchtiger Klebstoffauftrag benötigt. Der Klebstoff befindet sich im noch nicht klebenden Zustand bereits an definierten und fixierten Positionen im Grobfiltergewebe.

Das Grobfiltergewebe kann völlig problemlos zusammen mit dem und relativ zum Feinfiltergewebe in noch nicht klebendem Zustand ohne Verwendung weiteren Klebstoffs positioniert werden. Wenn die relative Positionierung der beiden Verbindungspartner stimmt, kann im Nachgang dazu durch Wärmeeinwirkung der Klebstoff durch Schmelzen der Oberfläche der Schmelzklebefäden genau dort erzeugt werden, wo er benötigt wird, und verklebt sodann bei seiner Aushärtung das Grobfiltergewebe mit dem Feinfiltergewebe zum Verbundfilter.

Es kann nicht zu viel oder zu wenig Klebstoff aufgetragen werden und es kann auch kein Klebstoff verlaufen, wodurch zu viele Maschen unnötig verklebt würden und den Durchflusswiderstand unnötig erhöhen würden.

Dies führt zu dem weiteren Vorteil, dass mit der vorliegenden Erfindung feinere Feinfiltergewebe (also mit kleinerer Maschenweite) mit dem Grobfiltergewebe verbunden werden können. Bei der bisher bekannten Verbindung mit einem separaten Klebstoffauftrag, verkleben bei feineren Feinfiltergeweben zu viele Maschen und der Durchflusswiderstand würde unbrauchbar hoch.

Bisher sind wir bei dem derzeit genutzten Patent auf 30 µm begrenzt. Bei feineren Geweben verschließen sich die Maschen durch Kleberauftrag

Gemäß einer vorteilhaften Ausführungsform der Erfindung sind die Schmelzklebefäden alternierend im Grobfiltergewebe angeordnet. Es werden also in der Webfolge im Wechsel regelmäßig oder unregelmäßig Schmelzklebefäden mit niedrigerer Schmelztemperatur und andere Fäden mit höherer Schmelztemperatur verwebt.

Mit anderen Worten folgt in der Webfolge in einer Richtung auf einen Schmelzklebefaden regelmäßig oder unregelmäßig zunächst ein anderer Faden bevor wieder ein Schmelzklebefaden verwebt wird. Die Schmelzklebefäden werden bei dieser Ausführungsform voneinander beabstandet verwebt, sodass sie nicht direkt nebeneinander angeordnet sind.

Dies wirkt einem großflächigen Verkleben einer Vielzahl an Maschen des Feinfiltergewebes entgegen und ist auch kostengünstiger, weil weniger Schmelzklebefäden benötigt werden.

Gemäß einer weiteren vorteilhaften Ausführungsform der Erfindung weist das Grobfiltergewebe Kettfäden und Schussfäden auf und die Schmelzklebefäden sind in Kettrichtung und/oder in Schussrichtung angeordnet.

Durch die Wahl der Richtung, in der die Schmelzklebefäden eingewebt werden, kann auf die Verwindungsfestigkeit des Gewebes Einfluss genommen werden, weil sich mit dem Schmelzklebefaden auch Kreuzungspunkte innerhalb des Grobfiltergewebes gezielt verkleben lassen, wodurch das Gewebe im Ergebnis mehr oder weniger steif gegen Verzug werden kann.

Gemäß einer weiteren vorteilhaften Ausführungsform der Erfindung weisen die Schmelzklebefäden vor dem Anschmelzen einen größeren Durchmesser als benachbarte Fäden auf. Die Schmelzklebefäden sind also gegenüber ihrer Nachbarschaft im Gewebe etwas erhaben.

Dies bietet den Vorteil, dass beim Schmelzen die Schmelzklebefäden sich am Feinfiltergewebe als Verbindungspartner anliegen und dieses kontaktieren. Dadurch kann sichergestellt werden, dass die Schmelzklebefäden auch tatsächlich mit dem Feinfiltergewebe eine Klebeverbindung eingehen.

Nach der Verklebung ist angestrebt, dass die Schmelzklebeflächen die Höhe ihrer Nachbarschaft annehmen. Es reicht dazu ein leichter Druck der beiden Gewebe gegeneinander, um den angeschmolzenen Klebstoff des Schmelzklebefadens mit dem Verbindungspartner zu kontaktieren.

Wenn die Schmelzklebefäden den gleichen Durchmesser hätten wie die benachbarten Fäden, müsste mehr Druck beim Verbinden aufgebracht werden, wodurch Fäden plattgedrückt werden können. Sie fließen dann quasi in der Gewebeebene auseinander und verkleinern die lichte Breite der Maschen, wodurch wiederum die Filtrationsleistung des Verbundfilters sinkt.

Gemäß einer weiteren vorteilhaften Ausführungsform der Erfindung sind die Schmelzklebefäden als Kernmantelfäden ausgebildet und weisen einen zumindest bereichsweise schmelzfähigen Mantel auf einem Kern auf.

Dies bietet den Vorteil, dass der Kern aus einem Material mit höherer Schmelztemperatur als der Mantel gebildet werden kann, um zu vermeiden, dass der Schmelzklebefaden beim Anschmelzen durchtrennt wird.

Der Mantel kann vollständig aus einem schmelzfähigen Material mit einer Schmelztemperatur gefertigt sein. Er kann aber auch aus unterschiedlichen Materialien mit unterschiedlichen Schmelztemperaturen gefertigt sein oder nur bereichsweise schmelzfähig sein.

Des Weiteren wird die Aufgabe erfindungsgemäß gelöst durch ein Verfahren zur Herstellung eines oben beschriebenen Verbundfilters, wobei das Grobfiltergewebe mit dem Feinfiltergewebe unter Wärmeeinwirkung kontaktiert wird, und wobei die Temperatur über der Schmelztemperatur der Oberfläche der Schmelzklebefäden liegt, und wobei danach der Verbund aus Grobfiltergewebe und Feinfiltergewebe erkaltet und die Klebeverbindung aushärtet.

Eine Ausführungsform ist in den Figuren dargestellt und wird nachfolgend beispielhaft erläutert. Es zeigen:
- Fig. 1: Eine Querschnittsansicht durch einen Verbundfilter.
- Fig. 2: Der Verbundfilter aus Fig. 1 in Ansicht von unten.
- Fig. 3: Eine Querschnittsansicht durch einen Schmelzklebefaden des Verbundfilters aus Fig. 1.

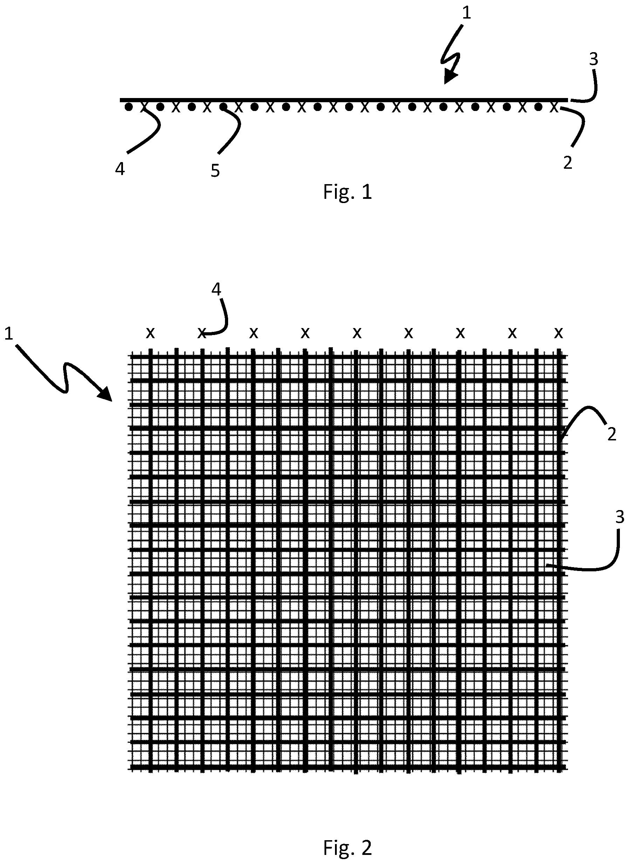

Fig. 1 zeigt eine Querschnittsansicht durch einen Verbundfilter 1. Der Verbundfilter 1 weist eine untere Lage Grobfiltergewebe 2 und eine obere Lage Feinfiltergewebe 3 auf.

Das Feinfiltergewebe 3 bildet die eigentliche Filterfunktion und hat eine vergleichsweise feine Webstruktur mit kleinerer Maschenweite als das Grobfiltergewebe 2.

Im Grobfiltergewebe 2 sind in diesem Beispiel im Wechsel alternierend jeweils ein Schmelzklebefaden 4 und ein anderer Faden 5 angeordnet. Die Schmelzklebefäden 4 sind in dieser Abbildung mit einem "x" gekennzeichnet und die anderen Fäden mit einem Punkt. Es liegt also jeweils ein Schmelzklebefaden 4 zwischen zwei anderen Fäden 5 und umgekehrt.

Die mit "x" dargestellten Schmelzklebefäden 4 kleben also, nachdem sie unter Wärmeeinwirkung angeschmolzen wurden, am Feinfiltergewebe 3 fest. Dadurch dass die Schmelzklebefäden 4 auch selbst in der Webstruktur des Grobfiltergewebes 2 verankert sind, ist danach das Grobfiltergewebe 2 fest mit dem Feinfiltergewebe 3 entlang der Schmelzklebefäden 4 verklebt.

Fig. 2 zeigt den Verbundfilter 1 aus Fig. 1 in Ansicht von unten. Die hier ebenfalls mit "x" gekennzeichneten Schmelzklebefäden 4 im Grobfiltergewebe 2 berühren das dahinterliegende Feinfiltergewebe 3 und verkleben mit diesem.

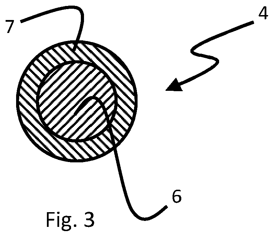

Fig. 3 zeigt eine Querschnittsansicht durch einen Schmelzklebefaden 4 des Verbundfilters 1 aus Fig. 1. Der Schmelzklebefaden 4 ist als Kernmantelfaden ausgebildet und umfasst in diesem Beispiel einen Kern 6 mit höherer Schmelztemperatur als der den Kern 6 umgebende schmelzfähige Mantel 7.

### Bezugszeichenliste:

1 Verbundfilter
2 Grobfiltergewebe
3 Feinfiltergewebe
4 Schmelzklebefaden
5 Faden
6 Kern
7 Mantel

## Patentansprüche

1. Verbundfilter (1) aufweisend zumindest ein Grobfiltergewebe (2) und zumindest ein Feinfiltergewebe (3),
**dadurch gekennzeichnet,**
**dass** im Grobfiltergewebe (2) Schmelzklebefäden (4) eingewebt sind, welche eine zumindest bereichsweise schmelzfähige Oberfläche aufweisen, und
**dass** diese schmelzfähige Oberfläche durch Anschmelzen selbst den Klebstoff bildet, um zumindest bereichsweise mit den Fäden des Feinfiltergewebes (3) zu verkleben.

2. Verbundfilter (1) nach Anspruch 1,
**dadurch gekennzeichnet,**
**dass** die Schmelzklebefäden (4) alternierend im Grobfiltergewebe (2) angeordnet sind.

3. Verbundfilter (1) nach einem der vorangehenden Ansprüche,
**dadurch gekennzeichnet,**
**dass** das Grobfiltergewebe (2) Kettfäden und Schussfäden aufweist und die Schmelzklebefäden (4) in Kettrichtung und/oder in Schussrichtung angeordnet sind.

4. Verbundfilter (1) nach einem der vorangehenden Ansprüche,
**dadurch gekennzeichnet,**
**dass** die Schmelzklebefäden (4) vor dem Anschmelzen einen größeren Durchmesser als benachbarte Fäden aufweisen.

5. Verbundfilter (1) nach einem der vorangehenden Ansprüche,
**dadurch gekennzeichnet,**
**dass** die Schmelzklebefäden (4) als Kernmantelfäden ausgebildet sind und einen zumindest bereichsweise schmelzfähigen Mantel (7) auf einem Kern (6) aufweisen.

6. Verfahren zur Herstellung eines Verbundfilters (1) nach einem der vorangehenden Ansprüche,
**dadurch gekennzeichnet,**
**dass** das Grobfiltergewebe (2) mit dem Feinfiltergewebe (3) unter Wärmeeinwirkung kontaktiert wird, und
**dass** die Temperatur über der Schmelztemperatur der Oberfläche der Schmelzklebefäden (4) liegt, und
**dass** danach der Verbund aus Grobfiltergewebe (2) und Feinfiltergewebe (3) erkaltet und die Klebeverbindung aushärtet.

## Claims

1. A composite filter (1) having at least one coarse filter fabric (2) and at least one fine filter fabric (3), **characterized in**
**that** into the coarse filter fabric (2) hot melt adhesive threads (4) are woven which have a surface that can be melted at least in some areas, and
**that** this surface that can be melted forms itself the adhesive by melting in order to adhere at least in some areas to the threads of the fine filter fabric (3).

2. A composite filter (1) according to claim 1, **characterized in that** the hot melt adhesive threads (4) are arranged alternately in the coarse filter fabric (2).

3. A composite filter (1) according to one of the preceding claims, **characterized in that** the coarse filter fabric (2) has warp threads and weft threads and the hot melt adhesive threads (4) are arranged in the warp direction and/or in the weft direction.

4. A composite filter (1) according to one of the preceding claims, **characterized in that** the hot melt adhesive threads (4) have a larger diameter than adjacent threads before melting.

5. A composite filter (1) according to one of the preceding claims, **characterized in that** the hot melt adhesive threads (4) are formed as core coat threads and have a coat (7), that can be melted at least in some areas, on a core (6).

6. A procedure for the manufacture of a composite filter (1) according to one of the preceding claims, **characterized in**
**that** the coarse filter fabric (2) is contacted with the fine filter fabric (3) under the influence of heat, and
**that** the temperature is higher than the melting temperature of the surface of the hot melt threads (4), and
**that** the composite of coarse filter fabric (2) and fine filter fabric (3) then cools down and the adhesive bond hardens.

## Revendications

1. Un filtre composite (1) comprenant au moins un tissu filtrant grossier (2) et au moins un tissu filtrant fin (3), **caractérisée en ce**
**que** des fils adhésifs thermofusibles (4), qui ont une surface qui peut être fondue au moins dans certaines zones, sont tissés dans le tissu filtrant grossier, et
**que** cette surface qui peut être fondue forme elle-même l'adhésif par une fusion afin d'adhérer au moins partiellement aux fils du tissu filtrant fin (3).

2. Le filtre composite (1) selon la revendication 1, **caractérisé en ce que** les fils adhésifs thermofusibles (4) sont disposés en alternance dans le tissu filtrant grossier (2).

3. Le filtre composite (1) selon l'une des revendications précédentes, **caractérisé en ce que** le tissu filtrant grossier (2) a des fils de chaîne et des fils de trame et que les fils adhésifs thermofusibles (4) sont disposés dans le sens de la chaîne et/ou dans le sens de la trame.

4. Le filtre composite (1) selon l'une des revendications précédentes, **caractérisé en ce que** les fils adhésifs thermofusibles (4) ont un diamètre plus grand que des fils adjacents avant la fusion.

5. Le filtre composite (1) selon l'une des revendications précédentes, **caractérisé en ce que** les fils adhésifs thermofusibles (4) sont formés en fils de gaine de noyau et ont une gaine (7), qui peut être fondu au moins dans certaines zones, sur un noyau (6).

6. Un procédé pour la fabrication d'un filtre composite (1) selon une des revendications précédentes, **caractérisé en ce**
**que** le tissu filtrant grossier (2) est contacté par le tissu filtrant fin (3) sous une influence de la chaleur, et
**que** la température est supérieure à la température de fusion de la surface des fils thermofusibles (4), et
**que** le composite de tissu filtrant grossier (2) et de tissu filtrant fin (3) refroidisse ensuite et que la liaison adhésive durcisse.
